# EUROPÄISCHE PATENTSCHRIFT

(11) **EP 4 255 741 B1**
(45) Veröffentlichungstag und Bekanntmachung des Hinweises auf die Patenterteilung: **08.01.2025**
(21) Anmeldenummer: 21820108.5
(22) Anmeldetag: 25.11.2021
(51) Int. Cl.: B60C 13/00, B29D 30/72

(54) **FAHRZEUGLUFTREIFEN**
PNEUMATIC TIRE FOR A VEHICLE
PNEUMATIQUE POUR UN VÉHICULE

(30) Priorität: 02.12.2020 DE 102020215188
(43) Veröffentlichungstag der Anmeldung: 11.10.2023
(73) Patentinhaber: Continental Reifen Deutschland GmbH, 30175 Hannover (DE)
(72) Erfinder: JURCO, Juraj, 30165 Hannover (DE); RITTWEGER, Stefan, 30165 Hannover (DE)
(74) Vertreter: Continental Corporation
(86) Internationale Anmeldenummer: PCT/DE2021/200202
(87) Internationale Veröffentlichungsnummer: WO 2022/117164

(56) Entgegenhaltungen:
- EP-A1- 3 680 113
- DE-U1- 202014 010 855
- FR-A1- 3 075 099
- FR-A1- 3 079 168

## Beschreibung

Die Erfindung betrifft einen Fahrzeugluftreifen mit zumindest einem auf seiner Außenfläche ausgebildeten Flächenelement mit einer dem Flächenelement eine Rauheit verleihenden, gegenüber einem Basisniveau ausgebildeten, mittels eines softwaregesteuerten Lasers erzeugten Kontraststruktur.

Ein Reifen eingangs genannter Art ist beispielsweise aus der FR 3 075 099 A1 bekannt. Der Reifen weist einen Laufstreifen und Seitenwände auf, wobei auf dem Laufstreifen und/oder auf zumindest einer Seitenwand zumindest ein Flächenelement mit einer Kontraststruktur ausgebildet ist. Die Kontraststruktur weist eine Vielzahl von Spitzen auf, welche in unregelmäßiger Weise in einer Dichte von zumindest einer Spitze pro Quadratmillimeter ausgebildet sind. Bevorzugter Weise sind die Spitzen in einer Dichte von maximal 100 Spitzen pro Quadratmillimeter ausgebildet. Die Spitzen weisen eine Höhe von 50 µm bis 600 µm, vorzugsweise von 100 µm bis 400 µm, besonders bevorzugt von 200 µm bis 350 µm auf. Diese Kontraststruktur soll eine gute Kontrastwirkung unabhängig vom Betrachtungswinkel ermöglichen.

Aus der DE 20 2014 010 855 U1 ist ein Gummiartikel, beispielsweise ein Reifen, bekannt, an dessen Außenfläche ein Flächenelement mit einer Kontraststruktur ausgebildet ist. Die Kontraststruktur weist zumindest einen ersten Oberflächenteil und zumindest einen zweiten Oberflächenteil auf, wobei der Reflexionsgrad des ersten Oberflächenteils größer ist als jener des zweiten Oberflächenteils. Die Oberflächenteile sind Teile eines digitalen Codemusters.

Aus der DE 10 2013 223 567 A1 ist ein Fahrzeugluftreifen bekannt, welcher auf einer Seitenwand einen optoelektronisch lesbaren Code aufweist. Der Code ist durch Zellen zweier verschiedener Zellenarten gebildet. Die Zellen weisen ein Oberflächenprofil auf, wobei die Oberflächenprofile derart sind, dass sich die Reflexionseigenschaften der einen Zellenart von jener der anderen Zellenart unterscheiden.

Es ist daher bekannt, auf der Außenfläche von Fahrzeugluftreifen, insbesondere auf Seitenwänden, Flächenelemente mit einer Kontraststruktur auszubilden, welche vorrangig die Aufgabe haben, einen Kontrast zu anderen, insbesondere zu unstrukturierten, Flächenbereichen zu schaffen, um derart beispielsweise die Erkennbarkeit von auf den Seitenwänden befindlichen Zeichen, etwa von Designelementen oder Logos, zu verbessern. Flächenelemente mit Kontraststrukturen ermöglichen dies, indem sie - im Vergleich zu glatten Flächen - weniger Licht reflektieren, auftreffendes Licht also "einfangen" und für den Betrachter daher dunkler als glatte Flächenbereiche erscheinen.

Bekannt sind insbesondere gleichmäßige Kontraststrukturen aus einer Vielzahl von parallel zueinander verlaufenden Rippen. Ferner sind unregelmäßige Kontraststrukturen aus - gegenüber den Rippen - "feineren" Strukturen, also deutlich kleiner dimensionierten, zipfelförmigen Erhebungen und/oder lochförmigen Vertiefungen bekannt, welche insbesondere durch Lasergravieren der Formteile erzeugt werden.

Bei der Ausgestaltung von gleichmäßige Kontraststrukturen bildenden Rippen ist für eine ausreichend gute Kontrastwirkung die Ausrichtung der Rippen an die Form des jeweilige Flächenelementes anzupassen. Aufgrund der parallelen Anordnung der Rippen reflektieren die Rippen unter bestimmen Betrachtungswinkeln verstärkt Licht, während sie wiederum unter bestimmten anderen Betrachtungswinkeln wenig bis kaum Licht reflektieren, sodass die Kontrastwirkung in dieser Hinsicht nicht optimal ist.

Unregelmäßige Kontraststrukturen sind gegenüber Rippen deutlich flexibler einsetzbar und zeigen eine gleichmäßigere, weitgehend richtungsunabhängige Lichtreflexion. Das Erzeugen von komplett unregelmäßigen Kontraststrukturen auf großen Flächenbereichen, wie es beispielsweise auf den Seitenwänden von Reifen wünschenswert bzw. erforderlich ist, ist jedoch nur mit sehr aufwändigen Lasergravuren möglich.

Der Erfindung liegt daher die Aufgabe zugrunde, bei einem Reifen der eingangs genannten Art eine in ihrer Größe einfach skalierbare Kontraststruktur mit einer zumindest weitgehend richtungsunabhängigen Kontrastwirkung zur Verfügung zu stellen.

Gelöst wird die gestellte Aufgabe erfindungsgemäß dadurch, dass die Kontraststruktur aus einer Vielzahl von rasterförmig zusammengefügten, in Draufsicht im Wesentlichen übereinstimmende Gestalt aufweisenden Kontraststrukturzellen gebildet ist, wobei "im Wesentlichen übereinstimmend" innerhalb der technischen Toleranzgrenzen des Herstellungsverfahrens, also der softwaregesteuerten Lasergravur, auftretende Abweichungen bezeichnet, wobei die Kontraststrukturzellen flächendeckend ausgeführte, ungleichmäßige Berg- und Talstrukturen aufweisen, wobei die Kontraststruktur entlang der gegenseitigen Anschlussstellen der Kontraststrukturzellen Talstrukturen aufweist, sodass die Rasterung der Kontraststruktur mit freiem Auge sichtbar ist, wobei die Anordnung der Kontraststrukturzellen und die Ausführung der ungleichmäßigen Berg- und Talstrukturen derart ist, dass die ungleichmäßigen Berg- und Talstrukturen, in Draufsicht betrachtet, durch Kongruenzabbildung ineinander überführbar sind.

Durch die Wiederholung bzw. Vervielfältigung einer derartigen Kontraststrukturzelle ist die Kontraststruktur in ihrer Größe beliebig skalierbar und daher hervorragend für Flächenbereiche unterschiedlicher Größe geeignet. Insbesondere lassen sich, beispielsweise auf den Seitenwänden von Fahrzeugreifen, großflächige Flächenelemente mit einer die Vorteile einer komplett unregelmäßigen Struktur aufweisenden Kontraststruktur auf einfache Weise zur Verfügung stellen. Da die Wiederholung höchstens auf sehr kurze Distanz erkennbar ist, ist für den Betrachter eine hervorragende Kontrastwirkung sichergestellt.

Gemäß einer bevorzugten Ausführungsform sind die Berg- und Talstrukturen in Draufsicht betrachtet durch Parallelverschiebung der Kontraststrukturzellen ineinander überführbar.

Gemäß einer weiteren bevorzugten Ausführung weisen die Kontraststrukturzellen in Draufsicht die Gestalt von Rechtecken, insbesondere Quadraten, oder Sechsecken, insbesondere regelmäßigen Sechsecken, auf. Durch solche Kontraststrukturzellen lässt sich die Größe der Kontraststruktur besonders einfach skalieren. Günstiger Weise lassen sich solche Kontraststrukturzellen - bei entsprechend ausgeführten, ungleichmäßigen Berg- und Talstrukturen - auf einfache Weise derart anordnen, dass sich die Kontraststrukturzellen durch Parallelverschiebung ineinander überführen lassen.

Im Hinblick auf die Skalierung der Größe der Kontraststruktur ist es ferner vorteilhaft, wenn die Kontraststrukturzellen eine Kantenlänge von 0,8 mm bis 1,5 mm, insbesondere von bis zu 1,2 mm, bevorzugt von 1,0 mm aufweisen.

Eine weitere Verbesserung der Kontrastwirkung lässt sich mit kombinierbaren bevorzugten Ausführungen erzielen, welche einen definierten Positivanteil der ungleichmäßigen Berg- und Talstrukturen aufweisen, wie nachfolgend dargelegt.

Eine erste dieser bevorzugten Ausführungen ist dadurch gekennzeichnet, dass die Berg- und Talstruktur jeder Kontraststrukturzelle mit einem sich über den Bereich der Kontraststrukturzelle erstreckenden Höhenflächenbereich einer ersten Höhenfläche, welche sich parallel zum Basisniveau der Kontraststruktur erstreckt und gegenüber diesem in einer Höhe von 80 µm liegt, eine ein- oder mehrteilige Schnittfläche aufweist, welche 80% bis 90% des Höhenflächenbereiches einnimmt.

Eine zweite dieser bevorzugten Ausführungen ist dadurch gekennzeichnet, dass die Berg- und Talstruktur jeder Kontraststrukturzelle mit einem sich über den Bereich der Kontraststrukturzelle erstreckenden Höhenflächenbereich einer zweiten Höhenfläche, welche sich parallel zum Basisniveau der Kontraststruktur erstreckt und gegenüber diesem in einer Höhe von 150 µm liegt, eine ein- oder mehrteilige Schnittfläche aufweist, welche 40% bis 60% des Höhenflächenbereiches einnimmt.

Eine dritte dieser bevorzugten Ausführungen ist dadurch gekennzeichnet, dass die Berg- und Talstruktur jeder Kontraststrukturzelle mit einem sich über den Bereich der Kontraststrukturzelle erstreckenden Höhenflächenbereich einer dritten Höhenfläche, welche sich parallel zum Basisniveau der Kontraststruktur erstreckt und gegenüber diesem in einer Höhe von 200 µm liegt, eine ein- oder mehrteilige Schnittfläche aufweist, welche 20% bis 40% des Höhenflächenbereiches einnimmt.

Eine vierte dieser bevorzugten Ausführungen ist dadurch gekennzeichnet, dass die Berg- und Talstruktur jeder Kontraststrukturzelle mit einem sich über den Bereich der Kontraststrukturzelle erstreckenden Höhenflächenbereich einer vierten Höhenfläche, welche sich parallel zum Basisniveau der Kontraststruktur erstreckt und gegenüber diesem in einer Höhe von 280 µm liegt, eine ein- oder mehrteilige Schnittfläche aufweist, welche 10% bis 20% des Höhenflächenbereiches einnimmt.

Bei der vierten bevorzugten Ausführung ist es von Vorteil, wenn die Höhenflächenbereiche der vierten Höhenfläche Bergspitzenbereiche von der sonstigen Berg- und Talstruktur trennen, wobei auf jedem Höhenflächenbereich bis zu fünf, insbesondere bis zu drei, Bergspitzenbereiche aufsitzen, welche bevorzugt an ihren höchsten Stellen eine gegenüber dem und senkrecht zum Basisniveau ermittelte Höhe von 300 µm bis 350 µm aufweisen.

Im Hinblick auf die Kontrastwirkung ist es besonders günstig, wenn die Berg- und Talstruktur jeder Kontraststrukturzelle mit sich über den Bereich der Kontraststrukturzelle erstreckenden Höhenflächenbereichen, welche zu parallel zum Basisniveau der Kontraststruktur erstreckenden Höhenflächen gehören, jeweils eine ein- oder mehrteilige Schnittfläche aufweist, wobei
eine erste Höhenfläche gegenüber dem Basisniveau in einer Höhe von 80 µm liegt,
eine zweite Höhenfläche gegenüber dem Basisniveau in einer Höhe von 150 µm liegt,
eine dritte Höhenfläche gegenüber dem Basisniveau in einer Höhe von 200 µm liegt und
eine vierte Höhenfläche gegenüber dem Basisniveau in einer Höhe von 280 µm liegt,
wobei folgende Beziehungen gelten:
   a) Größe der Schnittfläche mit dem Höhenflächenbereich der vierten Höhenfläche ≤ 0,7 x Größe der Schnittfläche mit dem Höhenflächenbereich der dritten Höhenfläche,
   b) Größe der Schnittfläche mit dem Höhenflächenbereich der dritten Höhenfläche ≤ 0,7 x Größe der Schnittfläche mit dem Höhenflächenbereich der zweiten Höhenfläche und
   c) Größe der Schnittfläche mit dem Höhenflächenbereich der zweiten Höhenfläche ≤ 0,7 x Größe der Schnittfläche mit dem Höhenflächenbereich der ersten Höhenfläche.

Die Talstrukturen weisen vorzugsweise beginnend ab einer dem Basisniveau abgewandten Seite einer Höhenfläche, welche gegenüber dem Basisniveau in einer Höhe von 150 µm liegt, eine Breite von zumindest 0,1 mm auf.

Gemäß einer weiteren bevorzugten Ausführung weist die Kontraststruktur in jeder Ebene, welche senkrecht auf das Basisniveau steht, ein Höhenprofil mit einer Vielzahl abwechselnd aufeinanderfolgender lokaler Maxima und lokaler Minima auf, wobei zwischen jedem lokalen Minimum und jedem der beiden unmittelbar benachbarten lokalen Maxima eine senkrecht auf das Basisniveau gemessene Höhendifferenz von 80 µm bis 300 µm besteht. Diese Maßnahme trägt dazu bei, die Kontrastwirkung der Kontraststruktur weiter zu verbessern.

Bei dieser Ausführung ist es von zusätzlichem Vorteil, wenn lokale Minima und benachbarte lokale Maxima vorhanden sind, zwischen welchen die Höhendifferenz zumindest 100 µm, bevorzugt zumindest 150 µm, beträgt.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine schematische Draufsicht auf einen Umfangsabschnitt einer Seitenwand eines Fahrzeugluftreifens mit einer Ausführungsvariante der Erfindung,
Fig. 2 eine Draufsicht auf eine Mikroskopaufnahme im Bereich eines auf der Seitenwand befindlichen Flächenelementes,
Fig. 3a und Fig. 3b Ansichten der Mikroskopaufnahme aus Fig. 2,
   wobei jeweils eine erste Höhenfläche eingezeichnet ist,
Fig. 4a und Fig. 4b Ansichten analog zu Fig. 3a und Fig. 3b,
   wobei jeweils eine zweite Höhenfläche eingezeichnet ist,
Fig. 5a und Fig. 5b weitere Ansichten analog zu Fig. 3a und Fig. 3b,
   wobei jeweils eine dritte Höhenfläche eingezeichnet ist,
Fig. 6a und Fig. 6b weitere Ansichten analog zu Fig. 3a und Fig. 3b,
   wobei eine vierte Höhenfläche eingezeichnet ist,
Fig. 7a eine Schrägansicht auf einen Teil der Mikroskopaufnahme aus Fig. 2, wobei die Mikroskopaufnahme entlang einer Ebene E1 aufgeschnitten ist und
Fig. 7b ein Höhenprofil der Mikroskopaufnahme in der Ebene E1 aus Fig. 7a.

Die Erfindung befasst sich mit auf der Außenfläche von Fahrzeugluftreifen ausgebildeten Flächenelementen mit einer speziellen Kontraststruktur.

Die Flächenelemente sind auf der Außenfläche in einem Bereich ausgebildet, welcher beim Einsatz des Fahrzeugluftreifens mit dem Untergrund nicht bzw. nicht flächig in Kontakt kommt, insbesondere auf Seitenwänden, am Laufstreifenauslauf, also an den außerhalb der Bodenaufstandsfläche zu den Seitenwänden verlaufenden Schulterflanken, oder auf Rillenflanken und/oder Rillengründen von im Laufstreifen verlaufenden Rillen. Besonders bevorzugt sind die Flächenelemente auf einer Seitenwand ausgebildet. Seitenwände von Fahrzeugluftreifen enthalten üblicherweise Zeichen, welche die vorgeschriebenen Angaben, wie Dimensionsangaben, den Speedindex, den Hersteller oder den Verwendungszweck (Sommer-/ Winterreifen) wiedergeben, oder sonstige Zeichen, wie Logos oder Designelemente. Die Flächenelemente mit einer speziellen Kontraststruktur können die erwähnten Zeichen auf der Seitenwand umgeben und/oder die Zeichen selbst bilden.

Die Flächenelemente können ferner auf der Lauffläche ausgebildet sein, also auf jenem Bereich der Außenfläche des Laufstreifens, welcher beim Einsatz des Fahrzeugluftreifens mit dem Untergrund in Kontakt tritt.

Das Niveau, gegenüber welchem die Kontraststruktur der Flächenelemente am Reifen ausgebildet ist, wird nachfolgend als Basisniveau N_{B} bezeichnet. Das Basisniveau N_{B} ist dabei jenes Niveau, von welchem sich die Positive der Kontraststruktur erheben, wie nachfolgend noch erläutert.

Die Kontraststruktur wird bevorzugt im Zuge der Vulkanisation des Fahrzeugluftreifens ausgeformt. Das bzw. die Formsegment(e) der Vulkanisationsform, beispielsweise die Seitenschalen, ist bzw. sind jeweils mit einer mit der Kontraststruktur korrespondieren Lasergravur versehen. Die Kontraststruktur ist daher ein Positiv der Lasergravur und somit ein Positiv gegenüber dem Basisniveau N_{B}. Ist beispielsweise eine Seitenschale direkt mit einer Lasergravur versehen, ist das Niveau der Seitenwand das Basisniveau N_{B}. Ist etwa eine auf der Seitenschale ausgebildete Erhebung mit einer Lasergravur versehen, ist das Basisniveau N_{B} das Niveau des Bodens einer auf der Seitenwand ausgebildeten flachen Vertiefung.

Alternativ kann die Kontraststruktur am fertig vulkanisierten Reifen mit Laser eingraviert werden. Das resultierende Basisniveau N_{B} ist somit gegenüber dem nicht gravierten Niveau, welches das Basisniveau umgibt, in Richtung Reifeninneres versetzt.

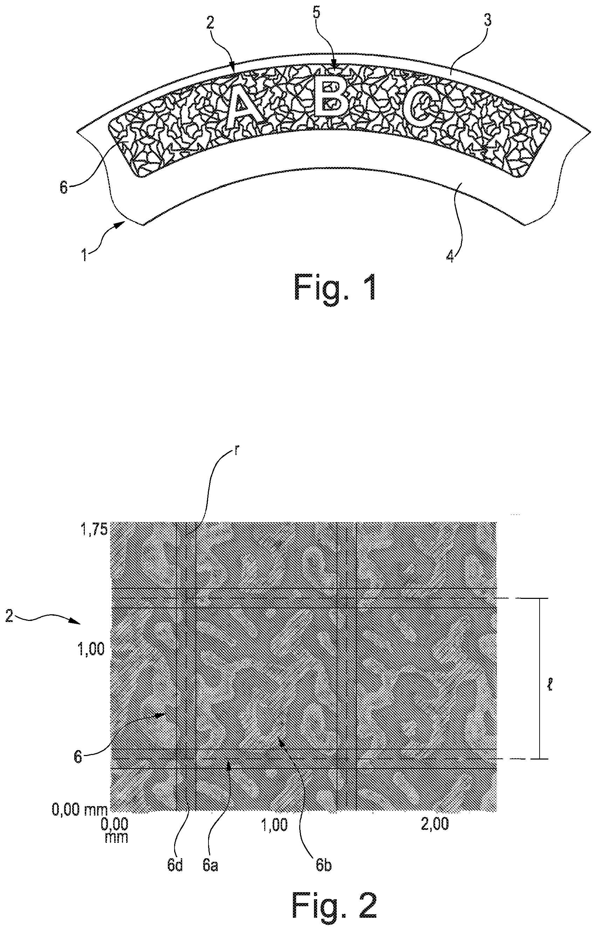

Fig. 1 zeigt schematisch eine in die Ebene projizierte Darstellung eines Umfangsabschnittes einer Seitenwand 1 mit einem Flächenelement 2, welches im Wesentlichen die Form eines Abschnittes eines Kreisringes aufweist. In Fig. 1 sind zusätzlich ein Laufstreifenauslauf 3 und ein äußerer Wulstbereich 4, welcher bei auf einer Felge montiertem Reifen durch die Felge zumindest teilweise abgedeckt ist, angedeutet. Das Flächenelement 2 umgibt einen Schriftzug 5, dessen Buchstaben A B C eine glatte Oberfläche aufweisen. Der Schriftzug 5 ist somit nicht Bestandteil des Flächenelementes 2.

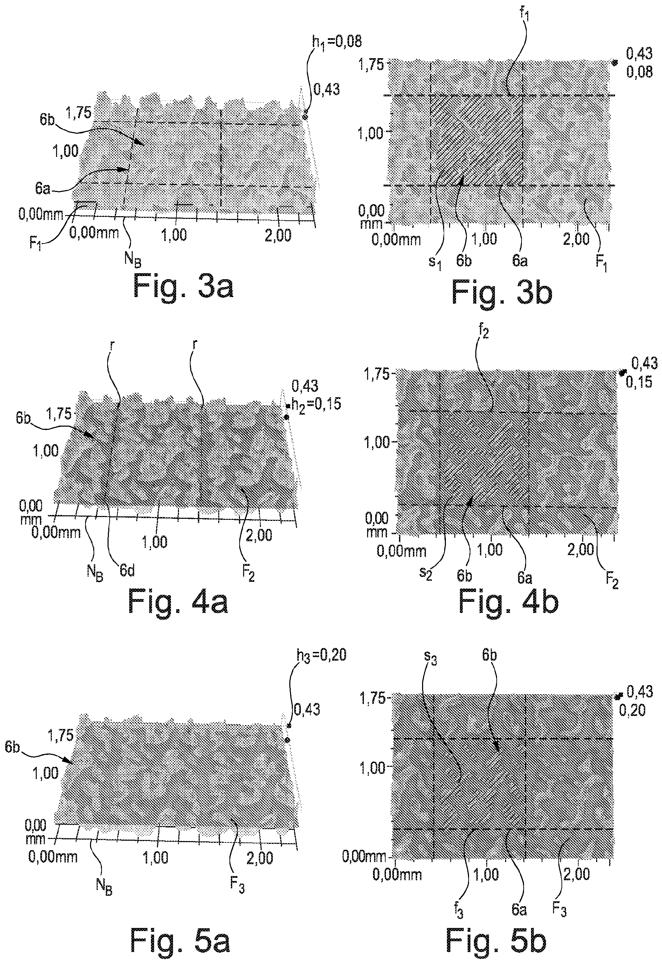

Fig. 2 zeigt eine Draufsicht auf eine Mikroskopaufnahme eines Teilbereiches des Flächenelementes 2, wobei ein Quadratraster (Quadratgitter) mit Rasterlinien r eingezeichnet ist. In Fig. 3a bis Fig. 6a ist das Basisniveau N_{B} jeweils durch Gitternetzlinien angedeutet.

Das Flächenelement 2 ist flächendeckend, also über seine gesamte Erstreckung, mit einer dreidimensionalen Kontraststruktur 6 versehen (Fig. 1), welche dem Flächenelement 2 eine Rauheit, also eine Unebenheit, verleiht (Fig. 3a bis Fig. 6a). Wie in Fig. 2 durch den bereits erwähnten Quadratraster angedeutet ist, setzt sich die Kontraststruktur 6 beim Ausführungsbeispiel aus einer Vielzahl von schachbrettartig aneinander anschließenden, in Draufsicht bezogen auf ihren äußeren Umfang quadratischen und im Wesentlichen übereinstimmend ausgeführten Kontraststrukturzellen 6a zusammen. Die Kontraststrukturzellen 6a weisen eine Kantenlänge l von 0,8 mm bis 1,5 mm, beim Ausführungsbeispiel von 1,0 mm, auf, wobei in Fig. 2 lediglich eine einzige Kontraststrukturzelle 6a komplett und von acht an diese angrenzenden Kontraststrukturzellen 6a Teilbereiche zu sehen sind.

Unter "im Wesentlichen übereinstimmend ausgeführten Kontraststrukturzellen 6a" werden zum einen solche verstanden, welche unmittelbar auf der Außenfläche des Reifens (im Ausführungsbeispiel auf der Seitenwand) mittels eines softwaregesteuerten Lasers als "überstimmend" erzeugt (eingraviert) wurden. Zum anderen werden unter "im Wesentlichen übereinstimmend ausgeführten Kontraststrukturzellen 6a" solche verstanden, welche im Zuge der Vulkanisation von einer auf der Innenseite des Formsegmentes (im Ausführungsbeispiel der Seitenschale) befindlichen, korrespondieren Lasergravur erzeugt wurden, wobei die Lasergravur eine Vielzahl von aneinander anschließenden Gravurbereichen, welche jeweils mittels eines softwaregesteuerten Lasers als "übereinstimmend" erzeugt wurden, umfasst. Bedingt durch die beim Lasergravieren auftretenden Schmelz- und Verdampfungsprozesse lassen sich mit den aktuell zur Verfügung stehenden Methoden an der Außenfläche von Fahrzeugluftreifen keine identischen (100% übereinstimmenden) Kontraststrukturzellen 6a erzeugen. Dies gilt sowohl für indirekt durch Lasergravieren der Formteile erzeugte Kontraststrukturzellen 6a als auch für direkt durch Lasergravieren des vulkanisierten Gummimaterials erzeugte Kontraststrukturzellen 6a. "Im Wesentlichen übereinstimmend" bezeichnet daher innerhalb der technischen Toleranzgrenzen des Herstellungsverfahrens (softwaregesteuerte Lasergravur) auftretende Abweichungen.

Wie insbesondere Fig. 2 in Kombination mit Fig. 3a zeigt, weist jede Kontraststrukturzelle 6a eine flächendeckend ausgeführte, daher über die gesamte Kontraststrukturzelle 6a ausgebildete ungleichmäßige Berg- und Talstruktur 6b mit ungleichmäßigen Bergstrukturen mit Bergrücken und Bergsätteln sowie ungleichmäßigen Talstrukturen auf, wobei sowohl die Bergstrukturen als auch die Talstrukturen gegenüber dem Basisniveau N_{B} über unterschiedliche Niveaus verlaufen bzw. sich auf unterschiedlichen Niveaus befinden. Wie bereits erwähnt wurde, sind die Kontraststrukturzellen 6a im Wesentlichen übereinstimmend ausgeführt, sodass diese im Wesentlichen übereinstimmend ausgeführte, ungleichmäßige Berg- und Talstrukturen 6b aufweisen. Die ungleichmäßigen Berg- und Talstrukturen 6b sind, in Draufsicht betrachtet, durch (verdrehungsfreie) Parallelverschiebung der Kontraststrukturzellen 6a ineinander überführbar. Zur Veranschaulichung dieses Sachverhalts ist in Fig. 2 in jeder Kontraststrukturzelle 6a der "gleiche" Teilbereich einer Bergstruktur bzw. der zu sehende Teil dieses Teilbereiches mit einer Schraffur versehen.

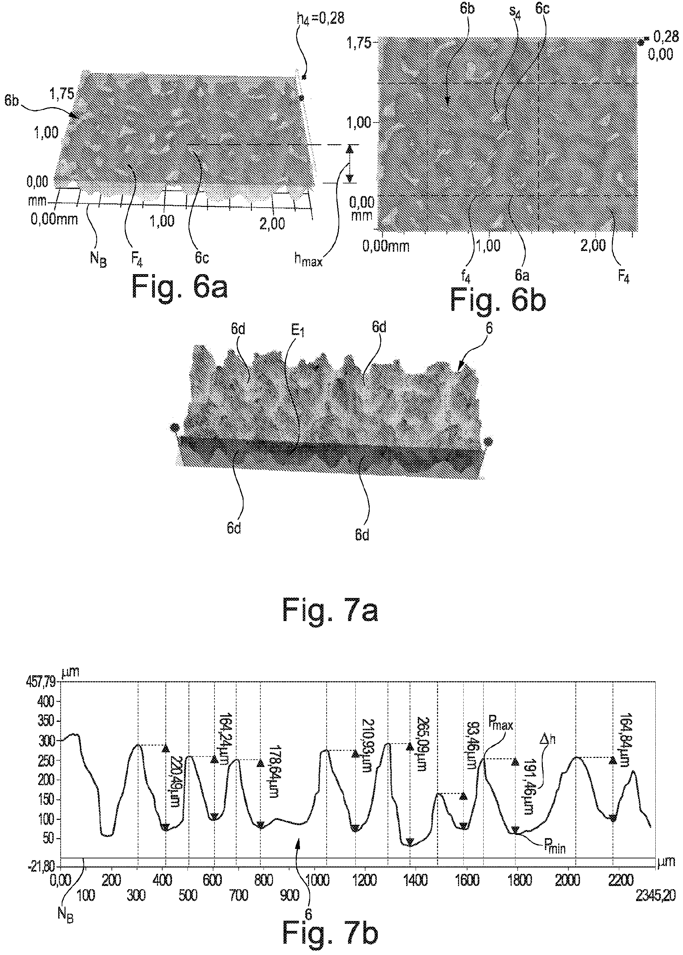

Die weitere Gestalt der Kontraststrukturzellen 6a wird nachfolgend unter Zuhilfenahme von Höhenflächen F₁, F₂, F₃ und F₄ (Fig. 3a bis Fig. 6a, Fig. 3b bis Fig. 6b) erläutert. Die Höhenflächen F₁, F₂, F₃ und F₄ erstrecken sich parallel zum Basisniveau N_{B} und schneiden die ungleichmäßige Berg- und Talstruktur 6b in verschiedenen senkrecht gegenüber dem Basisniveau N_{B} ermittelten Höhen h₁ (Höhenfläche F₁, Fig. 3a), h₂ (Höhenfläche F₂, Fig. 4a), h₃ (Höhenfläche F₃, Fig. 5a) und h₄ (Höhenfläche F₄, Fig. 6a). Die Höhe h₁ beträgt 80 µm, die Höhe h₂ beträgt 150 µm, die Höhe h₃ beträgt 200 µm und die Höhe h₄ beträgt 280 µm. Die Höhenflächen F₁, F₂, F₃ und F₄ weisen in jeder Kontraststrukturzelle 6a - übereinstimmend zur Größe einer Kontraststrukturzelle 6a - einen 1cm x 1cm - Höhenflächenbereich f₁, f₂, f₃, f₄ (Fig. 3b bis Fig. 6b) auf. In jeder Kontraststrukturzelle 6a weist die ungleichmäßige Berg- und Talstruktur 6b mit dem zugehörigen Höhenflächenbereich f₁, f₂, f₃, f₄ jeweils eine einteilige bzw. mehrteilige Schnittfläche s₁, s₂, s₃, s₄ (Fig. 3b bis Fig. 6b) auf, welche Bestandteil des Höhenflächenbereiches f₁, f₂, f₃, f₄ ist und welche in Fig. 3b bis Fig. 6b mit einer Schraffur versehen ist. Im Bereich jeder Schnittfläche s₁, s₂, s₃, s₄ ist der Höhenflächenbereich f₁, f₂, f₃, f₄ von der ungleichmäßigen Berg- und Talstruktur 6b (vergleiche Fig. 3a bis Fig. 6a) durchragt. Die Schnittfläche s₁ nimmt 80% bis 90% des Höhenflächenbereiches f₁ (Fig. 3b), die Schnittfläche s₂ nimmt 40% bis 60% des Höhenflächenbereiches f₂ (Fig. 4b), die Schnittfläche s₃ nimmt 20% bis 40% des Höhenflächenbereiches f₃ (Fig. 5b) und die Schnittfläche s₄ nimmt 10% bis 20% des Höhenflächenbereiches f₄ (Fig. 6b) ein. Dabei gilt die Beziehung s₄ < s₃ < s₂ < s₁. Bevorzugter Weise gelten ferner die Beziehungen s₄ ≤ 0,7 s₃, s₃ ≤ 0,7 s₂ und s₂ ≤ 0,7 s₁.

Wie Fig. 6a und Fig. 6b zeigen, trennt jeder Höhenflächenbereich f₄ Bergspitzenbereiche 6c von der sonstigen Berg- und Talstruktur 6b, also von der "unter" dem jeweiligen Höhenflächenbereich f₄ liegenden Bereich der Berg- und Talstruktur 6b. Ein Bergspitzenbereich 6c ist dabei ein zusammenhängender Bergbereich der Berg- und Talstruktur 6b, welcher auf dem Höhenflächenbereich f₄ bzw. der Höhenfläche F₄ "aufsitzt", also an diesen bzw. diese angrenzt. Innerhalb der Kontraststrukturzelle 6a befinden sich vorzugsweise drei bis zwanzig, insbesondere fünf bis fünfzehn, auf dem Höhenflächenbereich f₄ aufsitzende Bergspitzenbereiche 6c. Die Bergspitzenbereiche 6c weisen an ihren höchsten Stellen jeweils eine gegenüber und senkrecht zum Basisniveau N_{B} ermittelte Höhe hₘₐₓ (Fig. 6a) von 300 µm bis 350 µm auf.

Gemäß Fig. 2 weist die Kontraststruktur 6 beim gezeigten Ausführungsbeispiel entlang der Rasterlinien r von Positiven freie Talstrukturen 6d auf, welche die Rasterung der Kontraststruktur 6, also die gegenseitigen Anschlussstellen der Kontraststrukturzellen 6a, mit freiem Auge sichtbar machen. Die Talstrukturen 6d weisen spätestens beginnend ab der Höhenfläche F₂ (vergl. Fig. 4a) an der dem Basisniveau N_{B} abgewandten Seite der Höhenfläche F₂ eine senkrecht zu den Rasterlinien ermittelte Breite von zumindest 0,1 mm - je 0,05 mm an jeder Seite der Rasterlinie r - auf. Die Talstrukturen 6d können auch "unterhalb" der Höhenfläche F₂, also im Bereich zwischen der Höhenfläche F₂ und dem Basisniveau N_{B}, die erwähnte Breite aufweisen sowie auch am Basisniveau N_{B} verlaufen bzw. ausgebildet sein, d.h. am Basisniveau N_{B} die erwähnte Breite aufweisen.

Fig. 7a zeigt die Mikroskopaufnahme aus Fig. 2 in Schrägansicht, wobei die Kontraststruktur 6 entlang einer parallel zu den einen Rasterlinien r (vergl. Fig. 2) verlaufenden, senkrecht auf das Basisniveau N_{B} stehenden Ebene E₁ aufgeschnitten ist, wobei die Ebene E₁ nicht innerhalb einer der Talstrukturen 6d verläuft, aber - entsprechend des gezeigten Ausschnittes - zwei der Talstrukturen 6d schneidet (vergl. Fig. 2). Fig. 7b zeigt - in gegenüber Fig. 7a vergrößerter Form - das Höhenprofil der Kontraststruktur 6 in der Ebene E₁, wobei das Basisniveau N_{B} eingezeichnet ist. In der Ebene E₁ weist das Höhenprofil der Kontraststruktur 6 eine Vielzahl aufeinanderfolgender lokaler Maxima Pₘₐₓ und lokaler Minima Pₘᵢₙ auf. An jedem lokalen Maximum Pₘₐₓ nimmt die gegenüber und senkrecht zum Basisniveau N_{B} ermittelte Höhe der Kontraststruktur 6 beidseitig ab. An jedem lokalen Minimum Pₘᵢₙ nimmt die Höhe der Kontraststruktur 6 beidseitig zu. In der Ebene E₁ folgt mehrfach ein lokales Minimum Pₘᵢₙ abwechselnd auf ein lokales Maximum Pₘₐₓ. Zwischen jedem lokalen Minimum Pₘᵢₙ und den beiden unmittelbar benachbarten lokalen Maxima Pₘₐₓ liegt eine Höhendifferenz Δh von 80 µm bis 300 µm vor. Besonders bevorzugt sind lokale Minima Pₘᵢₙ und benachbarte lokale Maxima Pₘₐₓ vorhanden, zwischen welchen die Höhendifferenz Δh zumindest 100 µm, bevorzugt zumindest 150 µm, beträgt. Die Kontraststruktur 6 weist bevorzugt in jeder senkrecht auf das Basisniveau N_{B} stehenden Ebene, welche nicht ausschließlich durch eine Talstruktur 6d verläuft, ein Höhenprofil mit solchen lokalen Minima Pₘᵢₙ und benachbarten lokalen Maxima Pₘₐₓ auf.

Die Erfindung ist auf das beschriebene Ausführungsbeispiel nicht beschränkt.

Die Kontraststrukturzellen können in Draufsicht eine von der beschriebenen quadratischen Gestalt abweichende Gestalt aufweisen. Vorzugsweise sind die Kontraststrukturzellen in Draufsicht jeweils von einer Anzahl gerader Kanten begrenzt. Besonders bevorzugt weisen die Kontraststrukturzellen die Gestalt von Rechtecken, insbesondere Quadraten, oder Sechsecken, insbesondere regelmäßigen Sechsecken, auf. Die Kontraststrukturzellen der Kontraststruktur sind in Draufsicht betrachtet durch zumindest eine Kongruenzabbildung ineinander überführbar. Zu den Kongruenzabbildungen gehören bekannter Weise Spiegelungen (genauer Punktspiegelungen und senkrechte Achsenspiegelungen, nicht jedoch Kreisspiegelungen und Schrägspiegelungen), Drehungen, Parallelverschiebungen (Translationen) und Gleitspiegelungen (Schubspiegelungen). Es können daher auch Kontraststrukturzellen vorgesehen sein, welche durch das Ausführen mehrerer verschiedener Kongruenzabbildungen ineinander überführbar sind.

### Bezugsziffernliste

- 1: Seitenwand
- 2: Flächenelement
- 3: Laufstreifenauslauf
- 4: äußerer Wulstbereich
- 5: Schriftzug
- 6: Kontraststruktur
- 6a: Kontraststrukturzelle
- 6b: Berg- und Talstruktur
- 6c: Bergspitzenbereich
- 6d: Talstruktur
- E₁: Ebene
- F₁, F₂, F₃, F₄: Höhenfläche
- f₁, f₂, f₃, f₄: Höhenflächenbereich
- h₁, h₂, h₃, h₄, hₘₐₓ: Höhe
- Δh: Höhendifferenz
- l: Kantenlänge
- N_{B}: Basisniveau
- Pₘᵢₙ: lokales Minimum
- Pₘₐₓ: lokales Maximum
- r: Rasterlinie
- s₁, s₂, s₃, s₄: Schnittfläche

## Patentansprüche

1. Fahrzeugluftreifen mit zumindest einem auf seiner Außenfläche ausgebildeten Flächenelement (2) mit einer dem Flächenelement (2) eine Rauheit verleihenden, gegenüber einem Basisniveau (N_{B}) ausgebildeten, mittels eines softwaregesteuerten Lasers erzeugten Kontraststruktur (6),
**dadurch gekennzeichnet,**
**dass** die Kontraststruktur (6) aus einer Vielzahl von rasterförmig zusammengefügten, in Draufsicht im Wesentlichen übereinstimmende Gestalt aufweisenden Kontraststrukturzellen (6a) gebildet ist, wobei "im Wesentlichen übereinstimmend" innerhalb der technischen Toleranzgrenzen des Herstellungsverfahrens, also der softwaregesteuerten Lasergravur, auftretende Abweichungen bezeichnet, wobei die Kontraststrukturzellen (6a) flächendeckend ausgeführte, ungleichmäßige Berg- und Talstrukturen (6b) aufweisen,
wobei die Kontraststruktur (6) entlang der gegenseitigen Anschlussstellen der Kontraststrukturzellen (6a) Talstrukturen (6d) aufweist, sodass die Rasterung der Kontraststruktur (6) mit freiem Auge sichtbar ist,
wobei die Anordnung der Kontraststrukturzellen (6a) und die Ausführung der ungleichmäßigen Berg- und Talstrukturen (6b) derart ist, dass die ungleichmäßigen Berg- und Talstrukturen (6b), in Draufsicht betrachtet, durch Kongruenzabbildung ineinander überführbar sind.

2. Fahrzeugluftreifen nach Anspruch 1, **dadurch gekennzeichnet, dass** die Berg- und Talstrukturen (6b) in Draufsicht betrachtet durch Parallelverschiebung der Kontraststrukturzellen (6a) ineinander überführbar sind.

3. Fahrzeugluftreifen nach Anspruch 1 oder 2, **dadurch gekennzeichnet, dass** die Kontraststrukturzellen (6a) in Draufsicht die Gestalt von Rechtecken, insbesondere Quadraten, oder Sechsecken, insbesondere regelmäßigen Sechsecken, aufweisen.

4. Fahrzeugluftreifen nach Anspruch 3, **dadurch gekennzeichnet, dass** die Kontraststrukturzellen (6a) eine Kantenlänge (l) von 0,8 mm bis 1,5 mm, insbesondere von bis zu 1,2 mm, bevorzugt von 1,0 mm aufweisen.

5. Fahrzeugluftreifen nach einem der Ansprüche 1 bis 4, **dadurch gekennzeichnet, dass** die Berg- und Talstruktur (6b) jeder Kontraststrukturzelle (6a) mit einem sich über den Bereich der Kontraststrukturzelle (6a) erstreckenden Höhenflächenbereich (f₁) einer ersten Höhenfläche (F₁), welche sich parallel zum Basisniveau (N_{B}) der Kontraststruktur (6) erstreckt und gegenüber diesem in einer Höhe (h₁) von 80 µm liegt, eine ein- oder mehrteilige Schnittfläche (s₁) aufweist, welche 80% bis 90% des Höhenflächenbereiches (f₁) einnimmt.

6. Fahrzeugluftreifen nach einem der Ansprüche 1 bis 5, **dadurch gekennzeichnet, dass** die Berg- und Talstruktur (6b) jeder Kontraststrukturzelle (6a) mit einem sich über den Bereich der Kontraststrukturzelle (6a) erstreckenden Höhenflächenbereich (f₂) einer zweiten Höhenfläche (F₂), welche sich parallel zum Basisniveau (N_{B}) der Kontraststruktur (6) erstreckt und gegenüber diesem in einer Höhe (h₂) von 150 µm liegt, eine ein- oder mehrteilige Schnittfläche (s₂) aufweist, welche 40% bis 60% des Höhenflächenbereiches (f₂) einnimmt.

7. Fahrzeugluftreifen nach einem der Ansprüche 1 bis 6, **dadurch gekennzeichnet, dass** die Berg- und Talstruktur (6b) jeder Kontraststrukturzelle (6a) mit einem sich über den Bereich der Kontraststrukturzelle (6a) erstreckenden Höhenflächenbereich (f₃) einer dritten Höhenfläche (F₃), welche sich parallel zum Basisniveau (N_{B}) der Kontraststruktur (6) erstreckt und gegenüber diesem in einer Höhe (h₃) von 200 µm liegt, eine ein- oder mehrteilige Schnittfläche (s₃) aufweist, welche 20% bis 40% des Höhenflächenbereiches (f₃) einnimmt.

8. Fahrzeugluftreifen nach einem der Ansprüche 1 bis 7, **dadurch gekennzeichnet, dass** die Berg- und Talstruktur (6b) jeder Kontraststrukturzelle (6a) mit einem sich über den Bereich der Kontraststrukturzelle (6a) erstreckenden Höhenflächenbereich (f₄) einer vierten Höhenfläche (F₄), welche sich parallel zum Basisniveau (N_{B}) der Kontraststruktur (6) erstreckt und gegenüber diesem in einer Höhe (h₄) von 280 µm liegt, eine ein- oder mehrteilige Schnittfläche (s₄) aufweist, welche 10% bis 20% des Höhenflächenbereiches (f₄) einnimmt.

9. Fahrzeugluftreifen nach Anspruch 8, **dadurch gekennzeichnet, dass** die Höhenflächenbereiche (f₄) der vierten Höhenfläche (F₄) Bergspitzenbereiche (6c) von der sonstigen Berg- und Talstruktur (6) trennen, wobei auf jedem Höhenflächenbereich (f₄) bis zu fünf, insbesondere bis zu drei, Bergspitzenbereiche (6c) aufsitzen, welche bevorzugt an ihren höchsten Stellen eine gegenüber und senkrecht zum dem Basisniveau (N_{B}) ermittelte Höhe (hₘₐₓ) von 300 µm bis 350 µm aufweisen.

10. Fahrzeugluftreifen nach einem der Ansprüche 1 bis 9, **dadurch gekennzeichnet, dass** die Berg- und Talstruktur (6b) jeder Kontraststrukturzelle (6a) mit sich über den Bereich der Kontraststrukturzelle (6a) erstreckenden Höhenflächenbereichen (f₁, f₂, f₃, f₄), welche zu parallel zum Basisniveau (N_{B}) der Kontraststruktur (6) erstreckenden Höhenflächen (F₁, F₂, F₃, F₄) gehören, jeweils eine ein- oder mehrteilige Schnittfläche (s₁, s₂, s₃, s₄) aufweist, wobei eine erste Höhenfläche (F₁) gegenüber dem Basisniveau (N_{B}) in einer Höhe (h₁) von 80 µm liegt,
eine zweite Höhenfläche (F₂) gegenüber dem Basisniveau (N_{B}) in einer Höhe (h₂) von 150 µm liegt,
eine dritte Höhenfläche (F₃) gegenüber dem Basisniveau (N_{B}) in einer Höhe (h₃) von 200 µm liegt und
eine vierte Höhenfläche (F₄) gegenüber dem Basisniveau (N_{B}) in einer Höhe (h₄) von 280 µm liegt,
wobei folgende Beziehungen gelten:
a) Größe der Schnittfläche (s₄) mit dem Höhenflächenbereich (f₄) der vierten Höhenfläche (F₄) ≤ 0,7 x Größe der Schnittfläche (s₃) mit dem Höhenflächenbereich (f₃) der dritten Höhenfläche (F₃),
b) Größe der Schnittfläche (s₃) mit dem Höhenflächenbereich (f₃) der dritten Höhenfläche (F₃) ≤ 0,7 x Größe der Schnittfläche (s₂) mit dem Höhenflächenbereich (f₂) der zweiten Höhenfläche (F₂) und
c) Größe der Schnittfläche (s₂) mit dem Höhenflächenbereich (f₂) der zweiten Höhenfläche (F₂) ≤ 0,7 x Größe der Schnittfläche (s₁) mit dem Höhenflächenbereich (f₁) der ersten Höhenfläche (F₁).

11. Fahrzeugluftreifen nach einem der Ansprüche 1 bis 10, **dadurch gekennzeichnet, dass** die Talstrukturen (6d) beginnend ab einer dem Basisniveau (N_{B}) abgewandten Seite einer Höhenfläche (F₂), welche gegenüber dem Basisniveau (N_{B}) in einer Höhe (h₂) von 150 µm liegt, eine Breite von zumindest 0,1 mm aufweisen.

12. Fahrzeugluftreifen nach einem der Ansprüche 1 bis 11, **dadurch gekennzeichnet, dass** die Kontraststruktur (6) in jeder Ebene (E₁), welche senkrecht auf das Basisniveau (N_{B}) steht, ein Höhenprofil mit einer Vielzahl abwechselnd aufeinanderfolgender lokaler Maxima (Pₘₐₓ) und lokaler Minima (Pₘᵢₙ) aufweist, wobei zwischen jedem lokalen Minimum (Pₘᵢₙ) und jedem der beiden unmittelbar benachbarten lokalen Maxima (Pₘₐₓ) eine senkrecht auf das Basisniveau (N_{B}) gemessene Höhendifferenz (Δh) von 80 µm bis 300 µm besteht.

13. Fahrzeugluftreifen nach Anspruch 12, **dadurch gekennzeichnet, dass** lokale Minima (Pₘᵢₙ) und benachbarte lokale Maxima (Pₘₐₓ) vorhanden sind, zwischen welchen die Höhendifferenz (Δh) zumindest 100 µm, bevorzugt zumindest 150 µm, beträgt.

## Claims

1. Pneumatic vehicle tyre, having at least one surface element (2) that is formed on the outer face of the tyre and has a contrast structure (6) which is formed with respect to a base level (N_{B}), is generated by means of a software-controlled laser and gives the surface element (2) a roughness,
**characterized**
**in that** the contrast structure (6) is formed by a multiplicity of contrast structure cells (6a), which substantially coincide in shape in plan view and are joined together in the form of a grid, the term "substantially coincident" referring to deviations occurring within the technical tolerance limits of the production process, that is to say software-controlled laser engraving, wherein the contrast structure cells (6a) have irregular peak and trough structures (6b) of a surface-covering configuration,
wherein the contrast structure (6) has trough structures (6d) along the mutual connection points of the contrast structure cells (6a), so that the grid pattern of the contrast structure (6) is visible to the naked eye,
wherein the arrangement of the contrast structure cells (6a) and the configuration of the irregular peak and trough structures (6b) are such that, when considered in plan view, the irregular peak and trough structures (6b) can be transferred one into the other by congruence mapping.

2. Pneumatic vehicle tyre according to Claim 1, **characterized in that** the peak and trough structures (6b), when considered in plan view, can be transferred one into the other by parallel displacement of the contrast structure cells (6a).

3. Pneumatic vehicle tyre according to Claim 1 or 2, **characterized in that** the contrast structure cells (6a) have in plan view the shape of rectangles, in particular squares, or hexagons, in particular regular hexagons.

4. Pneumatic vehicle tyre according to Claim 3, **characterized in that** the contrast structure cells (6a) have an edge length (1) of 0.8 mm to 1.5 mm, in particular of up to 1.2 mm, preferably of 1.0 mm.

5. Pneumatic vehicle tyre according to one of Claims 1 to 4, **characterized in that** the peak and trough structure (6b) of each contrast structure cell (6a) has with a height surface region (f₁) extending over the region of the contrast structure cell (6a) of a first height surface (F₁), which extends parallel to the base level (N_{B}) of the contrast structure (6) and lies at a height (h₁) of 80 µm with respect thereto, a single- or multi-part intersecting surface (s₁) which occupies 80% to 90% of the height surface region (f₁).

6. Pneumatic vehicle tyre according to one of Claims 1 to 5, **characterized in that** the peak and trough structure (6b) of each contrast structure cell (6a) has with a height surface region (f₂) extending over the region of the contrast structure cell (6a) of a second height surface (F₂), which extends parallel to the base level (N_{B}) of the contrast structure (6) and lies at a height (h₂) of 150 µm with respect thereto, a single- or multi-part intersecting surface (s₂) which occupies 40% to 60% of the height surface region (f₂).

7. Pneumatic vehicle tyre according to one of Claims 1 to 6, **characterized in that** the peak and trough structure (6b) of each contrast structure cell (6a) has with a height surface region (f₃) extending over the region of the contrast structure cell (6a) of a third height surface (F₃), which extends parallel to the base level (N_{B}) of the contrast structure (6) and lies at a height (h₃) of 200 µm with respect thereto, a single- or multi-part intersecting surface (ss) which occupies 20% to 40% of the height surface region (f₃).

8. Pneumatic vehicle tyre according to one of Claims 1 to 7, **characterized in that** the peak and trough structure (6b) of each contrast structure cell (6a) has with a height surface region (f₄) extending over the region of the contrast structure cell (6a) of a fourth height surface (F₄), which extends parallel to the base level (N_{B}) of the contrast structure (6) and lies at a height (h₄) of 280 µm with respect thereto, a single- or multi-part intersecting surface (s₄) which occupies 10% to 20% of the height surface region (f₄).

9. Pneumatic vehicle tyre according to Claim 8, **characterized in that** the height surface regions (f₄) of the fourth height surface (F₄) separate peak tip regions (6c) from the rest of the peak and trough structure (6), wherein up to five, in particular up to three, peak tip regions (6c) sit on each height surface region (f₄) and preferably have at their highest points a height (hₘₐₓ) determined with respect to and perpendicular to the base level (N_{B}) of 300 µm to 350 µm.

10. Pneumatic vehicle tyre according to one of Claims 1 to 9, **characterized in that** the peak and trough structure (6b) of each contrast structure cell (6a) has with height surface regions (f₁, f₂, f₃, f₄) which extend over the region of the contrast structure cell (6a) and belong to height surfaces (F₁, F₂, F₃, F₄) extending parallel to the base level (N_{B}) of the contrast structure (6) in each case a single- or multi-part intersecting surface (s₁, s₂, ss, s₄), wherein a first height surface (F₁) with respect to the base level (N_{B}) lies at a height (h₁) of 80 µm,
a second height surface (F₂) with respect to the base level (N_{B}) lies at a height (h₂) of 150 µm,
a third height surface (F₃) with respect to the base level (N_{B}) lies at a height (h₃) of 200 µm and
a fourth height surface (F₄) with respect to the base level (N_{B}) lies at a height (h₄) of 280 µm,
wherein the following relationships apply:
a) the size of the intersecting surface (s₄) with the height surface region (f₄) of the fourth height surface (F₄) ≤ 0.7 x the size of the intersecting surface (ss) with the height surface region (f₃) of the third height surface (F₃),
b) the size of the intersecting surface (ss) with the height surface region (f₃) of the third height surface (F₃) ≤ 0.7 x the size of the intersecting surface (s₂) with the height surface region (f₂) of the second height surface (F₂), and
c) the size of the intersecting surface (s₂) with the height surface region (f₂) of the second height surface (F₂) ≤ 0.7 x the size of the intersecting surface (s₁) with the height surface region (f₁) of the first height surface (F₁).

11. Pneumatic vehicle tyre according to one of Claims 1 to 10, **characterized in that**, starting from a side, facing away from the base level (N_{B}), of a height surface (F₂) which lies at a height (h₂) of 150 µm with respect to the base level (N_{B}), the trough structures (6d) have a width of at least 0.1 mm.

12. Pneumatic vehicle tyre according to one of Claims 1 to 11, **characterized in that** the contrast structure (6) has in each plane (E₁) arranged perpendicular to the base level (Ns) a height profile with multiple local maxima (Pₘₐₓ) and local minima (Pₘᵢₙ) arranged successively in alternation, wherein there is a height difference (Δh), measured perpendicular to the base level (N_{B}), of 80 µm to 300 µm between each local minimum (Pₘᵢₙ) and each of the two directly adjacent local maxima (Pₘₐₓ).

13. Pneumatic vehicle tyre according to Claim 12, **characterized in that** local minima (Pₘᵢₙ) and adjacent local maxima (Pₘₐₓ) between which the height difference (Δh) is at least 100 µm, preferably at least 150 µm, are provided.

## Revendications

1. Pneumatique de véhicule, comprenant au moins un élément de surface (2) réalisé sur la surface extérieure du pneumatique avec une structure de contraste (6) conférant de la rugosité à l'élément de surface (2), réalisée par rapport à un niveau de base (N_{B}) et générée au moyen d'un laser commandé par logiciel, **caractérisé en ce que**
la structure de contraste (6) est formée à partir d'une pluralité de cellules de structure de contraste (6a) assemblées en forme de trame et présentant en vue de dessus une configuration substantiellement concordante, dans lequel
« substantiellement concordante » désigne des écarts apparaissant dans le cadre des limites de tolérance techniques du procédé de fabrication, c'est-à-dire de la gravure laser commandée par logiciel, dans lequel les cellules de structure de contraste (6a) présentent des structures de crêtes et de creux (6b) irrégulières, réalisées sur toute la surface,
dans lequel la structure de contraste (6) présente des structures de creux (6d) le long des points de raccordement mutuels des cellules de structure de contraste (6a) de sorte que le tramage de la structure de contraste (6) est visible à l'oeil nu, dans lequel l'agencement des cellules de structure de contraste (6a) et la réalisation des structures de crêtes et de creux irrégulières (6b) est tel que les structures de crêtes et de creux irrégulières (6b), en vue de dessus, peuvent être mutuellement converties par mappage de congruence.

2. Pneumatique de véhicule selon la revendication 1, **caractérisé en ce que** les structures de crêtes et de creux (6b), en vue de dessus, peuvent être mutuellement converties par un décalage parallèle des cellules de structure de contraste (6a).

3. Pneumatique de véhicule selon la revendication 1 ou 2, **caractérisé en ce que** les cellules de structure de contraste (6a) présentent en vue de dessus une configuration de rectangles, en particulier de carrés, ou d'hexagones, en particulier d'hexagones réguliers.

4. Pneumatique de véhicule selon la revendication 3, **caractérisé en ce que** les cellules de structure de contraste (6a) présentent une longueur d'arête (1) de 0,8 mm à 1,5 mm, en particulier jusqu'à 1,2 mm, de préférence de 1,0 mm.

5. Pneumatique de véhicule selon l'une quelconque des revendications 1 à 4, **caractérisé en ce que** la structure de crêtes et de creux (6b) de chaque cellule de structure de contraste (6a) présente avec une zone de surface en hauteur (f₁), s'étendant sur la zone de la cellule de structure de contraste (6a), d'une première surface en hauteur (F₁) qui s'étend en parallèle au niveau de base (N_{B}) de la structure de contraste (6) et est située par rapport à celui-ci à une hauteur (h₁) de 80 µm, une surface d'intersection (s₁) en une ou plusieurs parties qui occupe entre 80 % et 90 % de la zone de surface en hauteur (f₁).

6. Pneumatique de véhicule selon l'une quelconque des revendications 1 à 5, **caractérisé en ce que** la structure de crêtes et de creux (6b) de chaque cellule de structure de contraste (6a) présente avec une zone de surface en hauteur (f₂), s'étendant sur la zone de la cellule de structure de contraste (6a), d'une deuxième surface en hauteur (F₂) qui s'étend en parallèle au niveau de base (N_{B}) de la structure de contraste (6) et est située par rapport à celui-ci à une hauteur (h₂) de 150 µm, une surface d'intersection (s₂) en une ou plusieurs parties qui occupe entre 40 % et 60 % de la zone de surface en hauteur (f₂).

7. Pneumatique de véhicule selon l'une quelconque des revendications 1 à 6, **caractérisé en ce que** la structure de crêtes et de creux (6b) de chaque cellule de structure de contraste (6a) présente avec une zone de surface en hauteur (f₃), s'étendant sur la zone de la cellule de structure de contraste (6a), d'une troisième surface en hauteur (F₃) qui s'étend en parallèle au niveau de base (N_{B}) de la structure de contraste (6) et est située par rapport à celui-ci à une hauteur (h₃) de 200 µm, une surface d'intersection (ss) en une ou plusieurs parties qui occupe entre 20 % et 40 % de la zone de surface en hauteur (f₃).

8. Pneumatique de véhicule selon l'une quelconque des revendications 1 à 7, **caractérisé en ce que** la structure de crêtes et de creux (6b) de chaque cellule de structure de contraste (6a) présente avec une zone de surface en hauteur (f₄), s'étendant sur la zone de la cellule de structure de contraste (6a), d'une quatrième surface en hauteur (F₄) qui s'étend en parallèle au niveau de base (N_{B}) de la structure de contraste (6) et est située par rapport à celui-ci à une hauteur (h₄) de 280 µm, une surface d'intersection (s₄) en une ou plusieurs parties qui occupe entre 10 % et 20 % de la zone de surface en hauteur (f₄).

9. Pneumatique de véhicule selon la revendication 8, **caractérisé en ce que** les zones de surface en hauteur (f₄) de la quatrième surface en hauteur (F₄) séparent des zones de sommets (6c) du reste de la structure de crêtes et de creux (6), dans lequel jusqu'à cinq, en particulier jusqu'à trois, zones de sommets (6c) se trouvent sur chaque zone de surface en hauteur (f₄) et présentent de préférence aux endroits les plus hauts une hauteur établie (hₘₐₓ) de 300 µm à 350 µm par rapport et perpendiculairement au niveau de base (N_{B}).

10. Pneumatique de véhicule selon l'une quelconque des revendications 1 à 9, **caractérisé en ce que** la structure de crêtes et de creux (6b) de chaque cellule de structure de contraste (6a) présente avec des zones de surface en hauteur (f₁, f₂, f₃, f₄) s'étendant sur la zone de la cellule de structure de contraste (6a) et qui appartiennent à des surfaces en hauteur (F₁, F₂, F₃, F₄) s'étendant en parallèle au niveau de base (N_{B}) de la structure de contraste (6), respectivement une surface d'intersection (s₁, s₂, s₃, s₄) en une ou plusieurs parties, dans lequel une première surface en hauteur (F₁) se trouve à une hauteur (h₁) de 80 µm par rapport au niveau de base (N_{B}),
une deuxième surface en hauteur (F₂) se trouve à une hauteur (h₂) de 150 µm par rapport au niveau de base (N_{B}),
une troisième surface en hauteur (F₃) se trouve à une hauteur (h₃) de 200 µm par rapport au niveau de base (N_{B}), et
une quatrième surface en hauteur (F₄) se trouve à une hauteur (h₄) de 280 µm par rapport au niveau de base (N_{B}),
dans lequel les relations suivantes s'appliquent :
a) taille de la surface d'intersection (s₄) avec la zone de surface en hauteur (f₄) de la quatrième surface en hauteur (F₄) ≤ 0,7 x taille de la surface d'intersection (ss) avec la zone de surface en hauteur (f₃) de la troisième surface en hauteur (F3),
b) taille de la surface d'intersection (ss) avec la zone de surface en hauteur (f₃) de la troisième surface en hauteur (F₃) ≤ 0,7 x taille de la surface d'intersection (s₂) avec la zone de surface en hauteur (f₂) de la deuxième surface en hauteur (F2), et
c) taille de la surface d'intersection (s₂) avec la zone de surface en hauteur (f₂) de la deuxième surface en hauteur (F₂) ≤ 0,7 x taille de la surface d'intersection (s₁) avec la zone de surface en hauteur (f₁) de la première surface en hauteur (F₁).

11. Pneumatique de véhicule selon l'une quelconque des revendications 1 à 10, **caractérisé en ce que** les structures de creux (6d) présentent une largeur d'au moins 0,1 mm en partant d'un côté, détourné du niveau de base (N_{B}), d'une surface en hauteur (F₂) qui se trouve à une hauteur (h₂) de 150 µm par rapport au niveau de base (N_{B}).

12. Pneumatique de véhicule selon l'une quelconque des revendications 1 à 11, **caractérisé en ce que** la structure de contraste (6) sur chaque plan (E₁) qui est perpendiculaire au niveau de base (N_{B}) présente un profil de hauteur avec une pluralité de valeurs maximales locales (Pₘₐₓ) et de valeurs minimales locales (Pₘᵢₙ) locales qui se succèdent en alternance, dans lequel entre chaque valeur minimale locale (Pₘᵢₙ) et chacune des deux valeurs maximales locales (Pₘₐₓ) directement voisines, il existe une différence de hauteur (Δh), mesurée perpendiculairement au niveau de base (N_{B}), de 80 µm à 300 µm.

13. Pneumatique de véhicule selon la revendication 12, **caractérisé en ce qu'**il existe des valeurs minimales locales (Pₘᵢₙ) et des valeurs maximales locales (Pₘₐₓ) voisines entre lesquelles la différence de hauteur (Δh) est au moins de 100 µm, de préférence au moins de 150 µm.
